# EUROPÄISCHE PATENTSCHRIFT

(11) **EP 0 690 287 B1**
(45) Veröffentlichungstag und Bekanntmachung des Hinweises auf die Patenterteilung: **18.04.2001**
(21) Anmeldenummer: 95109566.0
(22) Anmeldetag: 20.06.1995
(51) Int. Cl.: G01B 11/04, G01B 11/16

(54) **Verfahren zum Vermessen von quaderförmigen Gegenständen und Einrichtung zur Durchführung des Verfahrens**
Method for measuring parallelepipedal objects and arrangement for carrying out this method
Procédé pour la mesure d'objets parallélépipédiques et dispositif pour la réalisation du procédé

(30) Priorität: 01.07.1994 DE 4423230
(43) Veröffentlichungstag der Anmeldung: 03.01.1996
(73) Patentinhaber: SIEMENS AKTIENGESELLSCHAFT, 80333 München (DE)
(72) Erfinder: Wulf, Wilhelm, Dipl.-Ing., D-90596 Schwanstetten (DE)

(56) Entgegenhaltungen:
- EP-A- 0 548 464
- WO-A-92/16818
- DE-A- 4 232 529
- US-A- 3 621 266

## Beschreibung

Die Erfindung bezieht sich auf ein Verfahren zum Vermessen von quaderförmigen Gegenständen, vorzugsweise Kartons, die entlang eines Förderwegs transportiert werden, sowie auf eine Einrichtung zur Durchführung des Verfahrens.

Aus der DE-A-42 32 529 ist ein Verfahren bekannt um mit schrägen Meßebenen die unregelmäßigen kanten von Schnittkölzern zu vermessen.

Auch in modernen Lager- und Versandsystemen haben sich Kartons als relativ robuste und dennoch kostengünstige Ladungsträger bewährt. Die Kartons kommen dabei in den verschiedensten Abmessungen vor. Typisch ist jedoch deren quaderförmige Gestalt. Wenn nun Kartons in einem hoch automatisierten Logistiksystem transportiert und gelagert werden sollen, ist es erforderlich, die Abmessungen dieser Kartons maschinell zu bestimmen. Ein Erfassen von Gegenständen quaderförmiger Gestalt kann durch Breiten-, Längen- und Höhenmessung technisch relativ einfach realisiert werden. Demzufolge ist es dann möglich, Ladungsträger, beispielsweise Tablare, optimal mit Kartons zu beladen.

Bei Kartons besteht jedoch das Problem, daß Stauchungen der Kartons während des Transports erfolgen können. Die Stauchungen führen zu Balligkeiten und Verkippen, d.h. Schrägverzerrungen der ursprünglich quaderförmigen Form. Es ist leicht einsehbar, daß ein Beladen von Tablaren mit balligen oder verkippten Kartons unter Umständen zum Problem führt, da diese Kartons eventuell über das jeweilige Ende des Tablar hinausragen, was beim Tablarhandling zu Problemen führen kann. Demzufolge können die Tablare bei balligen oder verkanteten Kartons nicht so voll gefüllt werden, wie dies bei ideal quaderförmigen Kartons der Fall wäre.

Aufgabe der Erfindung ist es, ein Verfahren der eingangs genannten Art so auszubilden, daß Informationen über die Deformation der quaderförmigen Gegenstände, insbesondere Kartons, bezüglich der Balligkeit bzw. des Verkippens ermittelt werden können. Ferner soll eine dazu geeignete Einrichtung geschaffen werden.

Gemäß der Erfindung wird ein solches Verfahren dadurch angegeben, daß in einer ersten Breitenmessung die Breite des Gegenstandes in Höhe des Förderwegs gemessen wird, daß in mindestens einer weiteren Breitenmessung die Breite des Gegenstandes oberhalb dieser Höhe gemessen wird und daß aus der Differenz dieser Breiten ein Signal für die Balligkeit des Gegenstandes ermittelt wird.

Wenn zusätzlich zur Balligkeit auch das Verkippen erfaßt werden soll, erweist es sich als vorteilhaft, daß dann, wenn bei gleicher Breite ein seitlicher Versatz dieser Breiten zueinander vorliegt, aus der Größe dieses Versatzes ein Signal für ein Verkippen des Gegenstandes ermittelt wird.

Die Erfindung geht dabei von der Erkenntnis aus, daß die Breite der quaderförmigen Gegenstände, insbesondere der Kartons, am Bodenbereich auch bei Stauchungen der Kartons, die zu Balligkeit und Verkippen führen, dennoch erhalten bleibt. Somit kann diese Breite ein Referenzmaß bieten und einfache Messungen im oberhalb des Bodens des Gegenstandes liegenden Bereich führen im Vergleich mit dem Referenzmaß zu den gewünschten Aussagen.

Dieses Verfahren läßt sich besonders günstig durch eine Einrichtung durchführen, bei der zur Breitenmessung eine schräg zur Förderwegebene angeordnete Meßeinrichtung, vorzugsweise nach Art eines Lichtvorhanges, vorgesehen ist. Durch die Schrägstellung wird beim Durchlauf eines quaderförmigen Gegenstandes zunächst ein Erfassen der Breite des Gegenstandes an seiner auf den Förderweg aufliegenden Kante ermöglicht, sodann ermittelt der Lichtvorhang die jeweilige maximale Breite.

Eine vorteilhafte Ausbildung der Einrichtung ist dadurch gekennzeichnet, daß eine Schrägstellung von etwa 60° vorgesehen ist.

Ein Ausführungsbeispiel der Erfindung ist in der Darstellung gezeigt und wird im folgenden näher erläutert.

In Form einer Prinzipdarstellung ist gezeigt, wie ein Karton K längs eines Förderbandes FB in der durch einen offenen Pfeil gezeigten Richtung bewegt wird. Die Höhenmessung des Kartons K kann dabei beispielsweise so erfolgen, daß der Karton K zunächst mit seiner Vorderkante VK einen Detektor D beeinflußt, woraufhin eine Meßeinrichtung M zur berührungslosen Höhenmessung wirksamgeschaltet wird. Das Ausgangssignal der Meßeinrichtung M gelangt an einen Umsetzer U. Ferner kann ausgehend von der Erstbeeinflussung des Detektors D durch die Vorderkante VK des Kartons K bis zur Freigabe der Beeinflussung des Detektors D mit Freigabe der Hinterkante HK des Kartons K im Umsetzer U festgestellt werden, wie weit sich das Förderband FB dazu fortbewegt hat. Dies geschieht mit Hilfe eines Weggebers W, der mit dem Förderband FB verbunden ist. Somit liegen nun Vermessungen von zwei Dimensionen des Kartons K vor.

Im weiteren gelangt der Karton K in den Einflußbereich einer Lichtschranke, die aus einem Sender S und einem Empfänger E besteht. Wenn nun, wie im Ausführungsbeispiel gezeigt, die Vorderkante VK des Kartons K in den Einflußbereich der Lichtschranke gerät, die um einen durch einen gebogenen Doppelpfeil angedeuteten Winkel von etwa 60° schräg zum Förderband FB ausgerichtet ist, bewirkt die Vorderkante VK eine Abschattung, deren Breite als ein als Referenzsignal verwendet wird und als Breitensignal vom Empfänger E an den Umsetzer U geliefert wird. Ferner kann auch die Lage dieser Breite in Bezug auf eine Referenzlage "Null" dem Umsetzer U mitgeteilt werden.

Beim weiteren Durchlauf des Kartons K durch die Lichtschranke, bestehend aus dem Sender S und dem Empfänger E, würde beim in der Darstellung gezeigten idealen Karton K keine Änderung des Empfangssignals im Empfänger E auftreten. Wenn nun jedoch der Karton K eine Verformung aufweisen sollte, die zu einer Balligkeit führt, die sich dahingehend äußert, daß die dem Betrachter zugewandte Seite des Kartons auf den Betrachter hin ausgebeult ist und die vom Betrachter abgewandte Seite in die Blattebene hin ausgewölbt ist, würde dies dazu führen, daß die Breitenmessung beim Durchlaufen des Kartons K durch die Lichtschranke zwar zunächst das erstgenannte Breitensignal liefern würde, daß diese Breite der Abschattung jedoch erst ansteigen und dann wieder abfallen würde, bis der Karton K die Lichtschranke verlassen hätte. Die Differenz zwischen der im ersten Moment erfaßten Breite, d.h. dem Referenzmaß, und der maximalen Breite beim Durchlaufen gibt die Balligkeit des jeweiligen Kartons an. Diese Balligkeit kann in einer Anzeigeeinrichtung A1 direkt angezeigt werden. Bei Überschreiten eines vorgegebenen Toleranzwertes kann dann zusätzlich eine Alarmanzeige der Anzeige A1 wirksamgeschaltet werden.

Ein weiterer möglicher Verformungsfall für den Karton K kann nun auch darin bestehen, daß der Karton K seitlich verkippt ist. Dies würde dazu führen, daß die Oberfläche des Kartons K sich nicht ideal oberhalb der Unterfläche des Kartons K befinden würde, sondern beispielsweise vom Betrachter gesehen weg verschoben wäre. Wenn der Karton K solchermaßen verformt wäre, würde dies zu folgenden Meßwerten der Lichtschranke führen. Zunächst würde beim Einlaufen der Vorderkante VK in de Bereich der Lichtschranke wieder die tatsächliche Breite des Kartons K als Referenzwert gemessen werden, aber der nun zwar immer noch weitgehend prismatische aber verkippte Karton K würde beim Durchlaufen durch die Lichtschranke ein Abschattungssignal liefern, das zwar die gleiche Breite aufweist, jedoch würde die Breite in Bezug auf die Basis "Null" auswandern. Die Größe dieses Auswandern kann dem Umsetzer U gemeldet und auf eine Anzeigeeinrichtung A2 signalisiert werden. Auch hierbei ist bei Überschreiten eines Toleranzwertes eine zusätzliche Visualisierung möglich.

Im übrigen kann auch der tatsächliche Breitenwert auf einer Anzeigeeinrichtung A3 angegeben werden. Der Wert für die Länge des Kartons K kann auf einer Anzeigeeinrichtung A4 angezeigt werden und der Wert für die Höhe des Kartons K kann auf eine Anzeigeeinrichtung A5 angezeigt werden. Selbstverständlich können die Anzeigeeinrichtungen A1 bis A5 auch mit zusätzlichen Verarbeitungseinrichtungen kombiniert werden.

Für die Höhenmessung kann selbstverständlich auch eine Lichtschrankenanordnung verwendet werden.

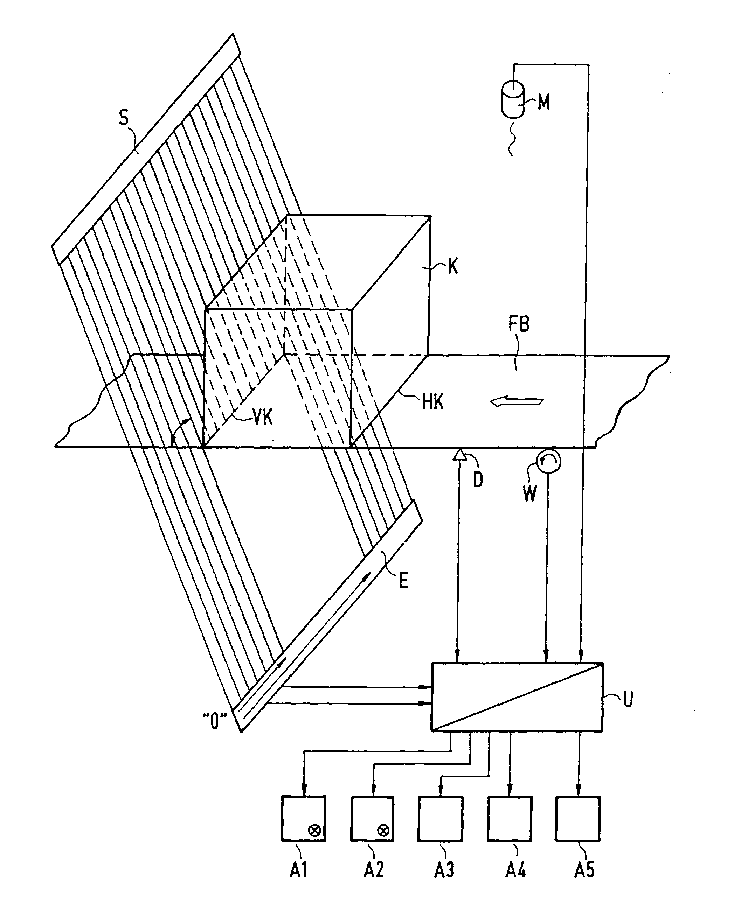

## Patentansprüche

1. Verfahren zum Vermessen von quaderförmigen Gegenständen, vorzugsweise Kartons, die entlang eines Förderwegs transportiert werden, **dadurch gekennzeichnet**, daß in einer ersten Breitenmessung die Breite des Gegenstandes (K) in Höhe des Förderwegs (B) gemessen wird, daß in mindestens einer weiteren Breitenmessung die Breite des Gegenstandes (K) oberhalb dieser Höhe gemessen wird und daß aus der Differenz dieser Breiten ein Signal für die Balligkeit des Gegenstandes (K) ermittelt wird.

2. Verfahren nach Anspruch 1, **dadurch gekennzeichnet**, daß dann, wenn bei gleicher Breite, ein seitlicher Versatz dieser Breiten zueinander vorliegt, aus der Größe dieses Versatzes ein Signal für ein Verkippen des Gegenstandes (K) ermittelt wird.

3. Einrichtung zur Durchführung des Verfahrens nach Anspruch 1 oder 2, **dadurch gekennzeichnet**, daß zur Breitenmessung eine schräg zur Förderwegebene angeordnete Meßeinrichtung, vorzugsweise nach Art eines Lichtvorhanges (S, E), vorgesehen ist.

4. Einrichtung nach Anspruch 3, **dadurch gekennzeichnet**, daß eine Schrägstellung von etwa 60° vorgesehen ist.

## Claims

1. Method for measuring parallelepipedal objects, preferably cartons, which are transported along a conveying path, characterized in that in a first width measurement, the width of the object (K) is measured at the height of the conveying path (B), in that in at least one further width measurement, the width of the object (K) is measured above this height, and in that a signal for the convexity of the object (K) is determined from the difference between these two widths.

2. Method according to Claim 1, characterized in that if, at the same width, there is a lateral offset of these two widths, a signal for tilting of the object (K) is determined from the magnitude of this offset.

3. Arrangement for carrying out the method according to Claim 1 or 2, characterized in that for the purpose of measuring the width, a measuring device arranged obliquely with respect to the plane of the conveying path is provided, preferably in the manner of a light curtain (S, E).

4. Arrangement according to Claim 3, characterized in that an oblique position of about 60° is provided.

## Revendications

1. Procédé pour la mesure d'objets parallélépipédiques, d'une façon préférentielle de cartons, qui sont déplacés le long d'une voie de convoyage,
**caractérisé par le fait** que, au cours d'une première mesure de largeur, on mesure la largeur de l'objet (K) à la hauteur de la voie de convoyage (B), que, au cours d'au moins une autre mesure de largeur, on mesure la largeur de l'objet (K) au dessus de cette hauteur et que, à partir de la différence des largeurs, on définit un signal relatif au bombage de l'objet (K).

2. Procédé selon la revendication 1
**caractérisé par le fait** qu'ensuite, et si, à largeur égale, il existe un écart latéral entre ces largeurs, on définit, à partir de l'importance de cet écart, un signal relatif à l'inclinaison latérale de l'objet (K).

3. Dispositif pour l'exécution du procédé selon la revendication 1 ou 2
**caractérisé par le fait** que, pour la mesure de la largeur, on prévoit un dispositif de mesure disposé obliquement par rapport au plan de la voie de convoyage, de préférence dans le genre d'un rideau lumineux (S, E).

4. Dispositif selon la revendication 3
**caractérisé par le fait** qu'une disposition oblique d'environ 60° est prévue.
